# EUROPÄISCHE PATENTANMELDUNG

(11) **EP 0 572 750 A1**
(43) Veröffentlichungstag der Anmeldung: **08.12.1993**
(21) Anmeldenummer: 92810431.4
(22) Anmeldetag: 04.06.1992
(51) Int. Cl.: B29C 67/14

(54) **Mechanisches Funktionsteil hoher Festigkeit aus thermoplastischem Verbundwerkstoff**

(71) Anmelder: SULZER INNOTEC AG, CH-8401 Winterthur (CH)
(72) Erfinder: Gysin, Hansjörg, CH-8400 Winterthur (CH)
(74) Vertreter: Heubeck, Bernhard

(57) **Zusammenfassung**

Das mechanische Funktionsteil mit einer Vorzugsrichtung besteht aus kompaktem, thermoplastischem Verbundwerkstoff mit technischen Endlosfasern. Es ist aus mehreren Langelementen (2) aufgebaut, welche in Vorzugsrichtung (10) orientiert und über ihre ganze Länge thermoplastisch miteinander verbunden sind. Die Langelemente bestehen aus einem inneren Kern (3) mit längsorientierten Fasern und einem umhüllenden Mantel (6) mit sich kreuzenden Fasern. Dieser einfache Aufbau ergibt hohe spezifische Festigkeiten für weitgehend beliebige Formen von Funktionsteilen.

## Beschreibung

Die Erfindung betrifft ein mechanisches Funktionsteil hoher spezifischer Festigkeit aus kompaktem thermoplastischem Verbundwerkstoff mit technischen Endlosfasern und mit einer Vorzugsrichtung. Aus der EP 0 402 309 A1 sind solche Funktionsteile in Form von Profilstangen und Profilstücken bekannt. Dabei ist aber deren Querschnittsfläche über die Länge eines Profilstücks im wesentlichen konstant. Dieser bekannte Strukturaufbau kann deshalb jedoch nicht auf Werkstücke oder Funktionsteile mit anderen Formen mit nicht konstanten Querschnittsflächen angewendet werden z.B. auf solche mit sich verjüngenden, flächigen oder gerundeten Formen.

Es ist Aufgabe der vorliegenden Erfindung, einen Strukturaufbau für Funktionsteile zu schaffen, welcher weitgehend beliebige Formen ermöglicht und wobei die Funktionsteile hohe Steifigkeiten und vor allem in Vorzugsrichtung hohe spezifische Festigkeiten und auch hohe Zeitstandfestigkeiten aufweisen sollen. Die mechanischen Funktionsteile sollen überdies einfach herstellbar sein.

Diese Aufgabe erfüllen erfindungsgemässe Funktionsteile nach Anspruch 1. Die in sich stabilen Langelemente, deren innige Verbindung miteinander und deren Ausrichtung entlang der Vorzugsrichtungen, ergeben Strukturen mit besonders guten spezifischen Festigkeitswerten bezüglich Zug-, Druck- und Torsion. Ueberdies werden damit lokale Schwachstellen auch in komplizierten Formen weitgehend vermieden.

Die abhängigen Ansprüche betreffen vorteilhafte Weiterbildungen der erfinderischen Strukturen. So können die Langelemente einen unidirektionalen Kern oder einen Kern aus einem langezogenen Geflecht mit kleinem Faserwinkel aufweisen. Der umhüllende Mantel kann auf einfache Art aus sich kreuzenden Gelegen oder aus einem Geflecht gebildet sein. Besonders gute mechanische Eigenschaften können mit hochkompaktierten Funktionsteilen mit einem Porenanteil von höchstens 1 % erreicht werden. Besonders geeignete Thermoplaste können sein: Polyamide Polyarylate, Polyaryletherketone, Polyarylsulfone, Polyetherimide, Polyethylenterephthalate, Polyphenylenether oder Polyphenylensulfide. Geeignete Endlosfasern können aus Kohle, Glas oder Aramid bestehen. Abgestimmt auf die Form des Funktionsteils können besonders gute mechanische Eigenschaften auch erreicht werden: mit Langelementen, deren Länge mindestens das Fünffache ihres kleinsten Durchmessers beträgt oder mit Langelementen, deren Enden schräg auslaufen und so eine intensivere Verbindung zu benachbarten Langelementen ergeben. Die Langelemente können auch in ganzer Länge durch das Funktionsteil durchgehend sein, d.h. nur an dessen Oberflächen enden. Mit Vorteil sind auch in flachen Stellen des Funktionsteils alle Langelemente mindestens teilweise durch ein benachbartes Langelement überdeckt und es können mindestens 6 Langelemente in einem Hauptquerschnitt liegen. Die erfindungsgemässen Funktionsteile können verschiedene Formen aufweisen: sie können an einem Ende auslaufend oder abgeflacht sein, sie können stab- oder hebelförmig ausgebildet sein und sie können schaufelförmige, sphärische oder schalenförmige Bereiche aufweisen. Mit dem erfindungsgemässen Strukturaufbau können vor allem auch mechanische Funktionsteile gebildet werden, welche hohen mechanischen Belastungen und hohen Beschleunigungen ausgesetzt sind. Dies betrifft im speziellen Turbinenschaufeln oder Hebel mit mindestens einer Durchgangsöffnung für eine Drehachse.

Die Erfindung wird im folgenden anhand von Beispielen und Figuren weiter erläutert. Es zeigen:
- Fig.1a,b,c: Ein erfindungsgemässes mechanisches Funktionsteil aus kompaktierten Langelementen und den Aufbau der Langelemente,
- Fig.2, 3: Beispiele von Langelementen mit innerem Kern und Mantel,
- Fig.4: ein Langelement mit schrägen Enden,
- Fig.5: ein Funktionsteil mit durchgehenden Langelementen,
- Fig.6: einen Querschnitt durch ein Funktionsteil mit verformten und sich überlappenden Langelementen,
- Fig.7: ein Funktionsteil in einer Fliesspressform,
- Fig.8: ein Funktionsteil mit einem sich verjüngenden Ende und einem schalenförmigen Teil,
- Fig.9: ein Beispiel mit einem stabförmigen und einem schaufelförmigen Teil,
- Fig.10: ein Beispiel mit einem sphärischen Bereich,
- Fig.11: eine Turbinenschaufel als Funktionsteil,
- Fig.12: einen Hebel mit zwei Achslöchern.

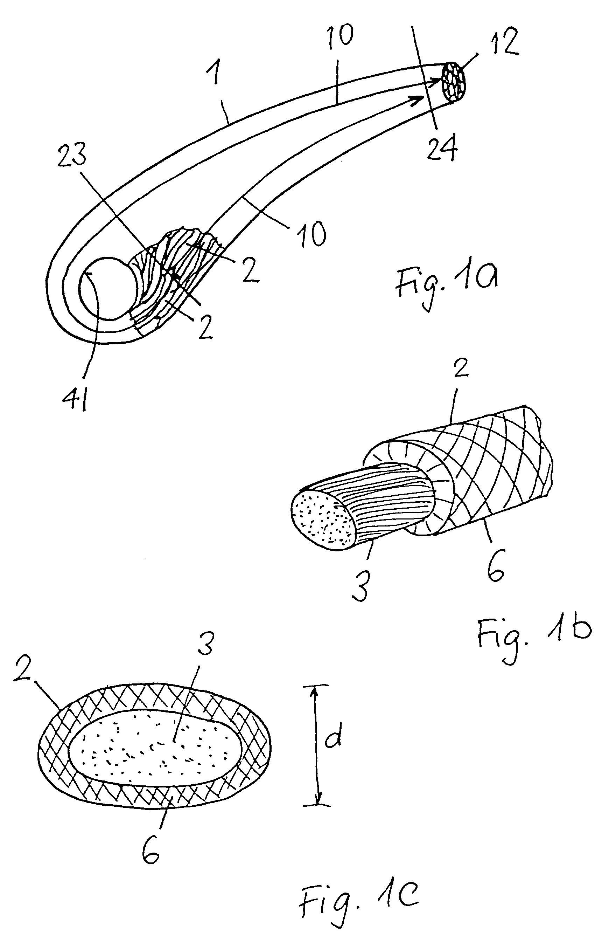

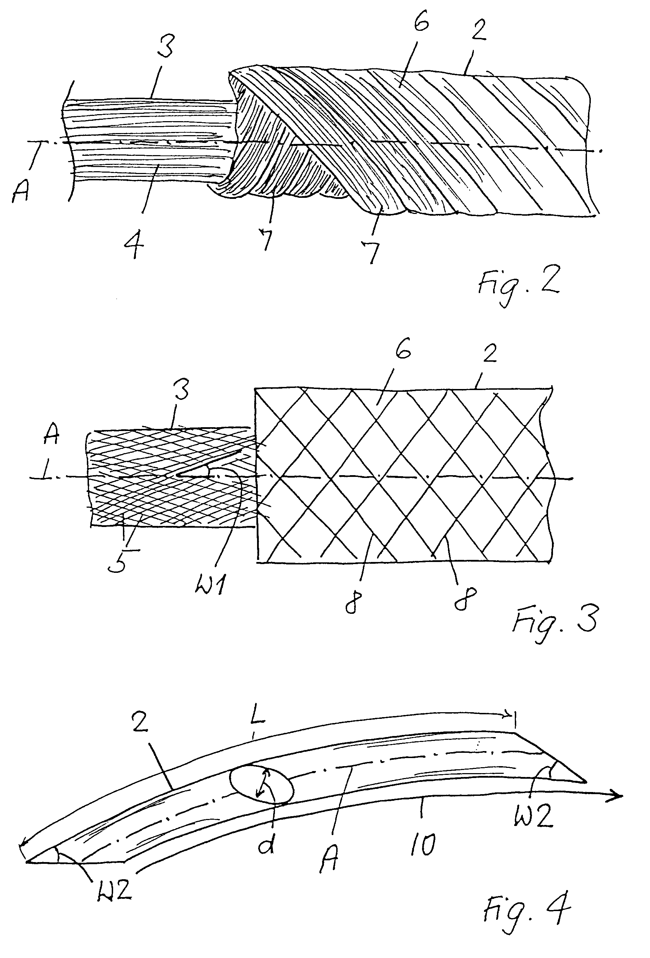

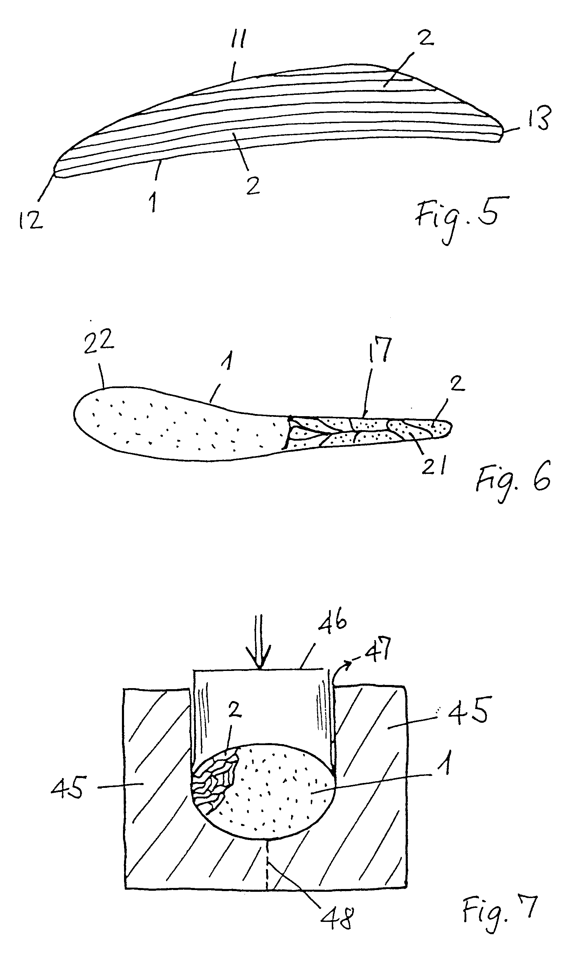

Figur 1a zeigt ein mechanisches Funktionsteil 1 in Form eines sich verjüngenden Hebels mit einer Durchgangsöffnung 41 an seinem breiteren Ende. Das Funktionsteil ist aus kompaktierten Langelementen 2 aufgebaut, welche an jeder Stelle entlang einer Vorzugsrichtung 10 orientiert und über ihre ganze Länge thermoplastisch miteinander verbunden sind. Die Vorzugsrichtung 10 verläuft hier von einer Endfläche 12 her längs des Hebels und rund um die Oeffnung 41 herum. Die Querschnittsform und -grösse verändert sich in Vorzugsrichtung 10 bzw. über das Funktionsteil 1 hinweg von einem kleinen Querschnitt 24 bei der Endfläche 12 zu einem grösseren veränderten Querschnitt 23 vor der Oeffnung 41. Die Langelemente 2, in Fig.1b und im Querschnitt gezeigt in Fig.1c, weisen einen inneren Kern 3 mit grossteils längsorientierten Endlosfasern und einem umgebenden Mantel 6 mit sich kreuzenden Fasern auf. Figur 1c zeigt einen ovalen Querschnitt mit einem kleinsten Durchmesser d. Das Langelement 2 im Beispiel von Figur 2 weist einen unidirektionalen Kern 4 umgeben von zwei sich kreuzenden, übereinanderliegenden Gelegen 7 auf. In Figur 3 besteht der Kern aus einem langgezogenen Geflecht 5 mit einem Faserwinkel W1 von maximal 20° zur Elementachse A. Der umhüllende Mantel 6 besteht aus einem Geflecht 8 mit relativ grossem Faserwinkel von z.B. 35° - 45°. Beim Gelege 7 kann dieser Faserwinkel auch noch grösser sein, z.B. 45° - 55°. Durch den erfindungsgemässen Aufbau aus Langelementen 2 mit längsorientiertem Kern und stark gekreuzten Mantelfasern können auf einfache Art Funktionsteile mit in weiten Bereichen beliebigen Formen und mit ausgezeichneten mechanischen Festigkeits- und Torsionseigenschaften über das ganze Volumen des Funktionsteils und ohne Schwachstellen hergestellt werden. Vermeidung von Schwachstellen ist bei Verbundwerkstoffteilen besonders wichtig und auch entsprechend schwierig zu erreichen.

In Figur 4 ist ein Langelement 2 gezeigt, dessen Länge L mehr als das fünffache seines kleinsten Durchmessers d beträgt. Mit Vorteil meist sogar das zehnfache oder mehr. Die Enden des Langelements 2 sind schräg abgeschnitten bzw. laufen schräg aus mit einem Winkel W2 von z.B. 30° - 60° zur Elementachse A, wodurch die thermoplastische Verbindung zwischen verschiedenen Langelementen im Funktionsteil und dessen Kompaktheit weiter verbessert werden kann.

Strukturen mit besonders hoher Festigkeit können nach Figur 5 erreicht werden, indem alle Langelemente 2 an der Oberfläche 11 und vor allem an den Endflächen 12, 13 eines Funktionsteils enden, d.h. wenn sie im Inneren durchgehend sind. Figur 6 zeigt einem Hauptquerschnitt durch ein Funktionsteil mit einem abgeflachten Bereich 17, wobei auch hier immer noch jedes Langelement 2 mindestens teilweise durch ein benachbartes Langelement 21 überdeckt ist, um damit gute Festigkeitswerte sicherzustellen. In einem Hauptquerschnitt 22 sollten mit Vorteil mindestens sechs Langelemente 2 liegen.

Figur 7 zeigt eine Fliesspressform 45 mit einem Stempel 46 zur Herstellung erfindungsgemässer Funktionsteile. Dabei werden Langelemente 2 in Vorzugsrichtung 10 und in den Funktionsteilen entsprechender Menge und Verteilung in die Form 45 heiss eingelegt, dann in der Form unter hohem Druck (z.B. mehrere 100 bar) und bei einer Temperatur über dem Erweichungspunkt durch Fliesspressen kompaktiert und dabei auch die Luft zwischen den Langelementen 2 ausgepresst (47). Anschliessend wird das Pressteil 1 unter

Druck bis zur Erreichung der Formstabilität abgekühlt. Auf diese Art wird ein Porenanteil von weniger als 2 %, vorzugsweise von weniger als 1 %, erreicht. Die Pressform 45 kann entsprechend dem gewünschten Fliesspressteil 1 auch mehrteilig, z.B. in der Ebene 48 geteilt sein.

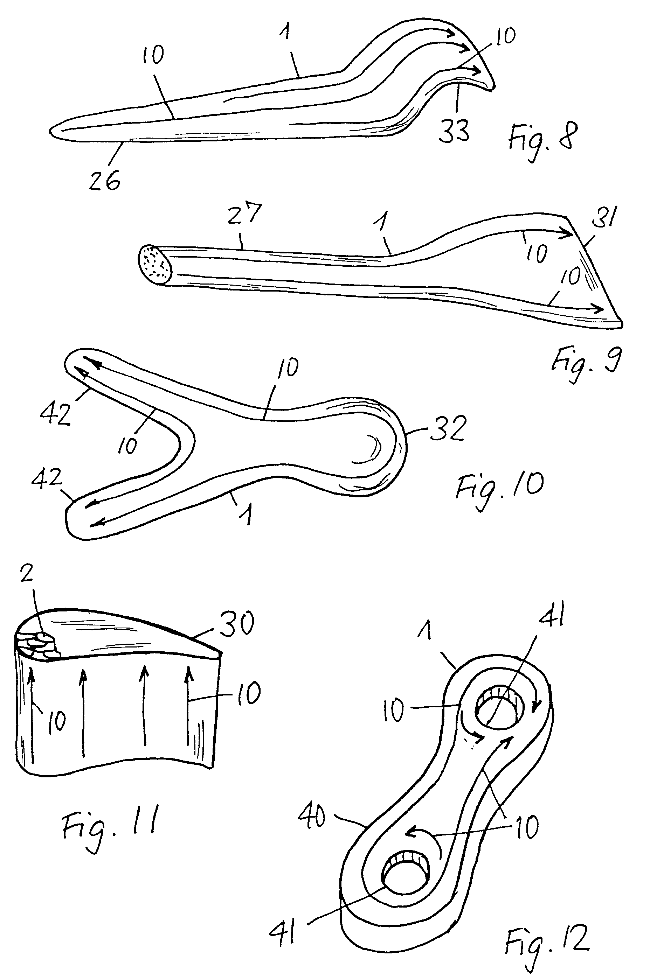

Der erfindungsgemässe Aufbau des Funktionsteils ermöglicht es, eine grosse Vielfalt von Formen zu realisieren, wie dies durch die Beispiele illustriert wird. Das Beispiel von Figur 8 zeigt ein hebelförmiges Funktionsteil 1 mit einem sich verjüngenden Ende 26 und einem schalenförmigen Teil 33, welcher z.B. als Lagerschale dienen kann. Das Beispiel von Figur 9 weist einen stabförmigen Teil 27 auf, welcher in eine flache Schaufel 31 übergeht. In Figur 10 wird ein sphärisch gewölbter oder kugelförmiger Teil 32 von zwei zusammenlaufenden Zweigen 42 getragen. Figur 11 zeigt eine Turbinenschaufel 30 als Funktionsteil, wobei die Vorzugsrichtung 10 hier in radialer Richtung verläuft. Dank sehr hoher spezifischer Festigkeit und kleiner Masse können damit entsprechend sehr hohe Drehzahlen und Leistungen der Turbine erreicht werden. Figur 12 zeigt einen Hebel 40 mit zwei Durchgangsöffnungen 41 welcher z.B. als Pleuel einsetzbar ist. Die Vorzugsrichtungen 10 folgen im wesentlichen den Belastungsrichtungen im Hebel und sie umschliessen die Durchgangsöffnungen 41 wodurch z.B. auch resistente Achslager gebildet werden können.

## Patentansprüche

1. Mechanisches Funktionsteil hoher spezifischer Festigkeit aus kompaktem, thermoplastischem Verbundwerkstoff mit technischen Endlosfasern, mit einer Vorzugsrichtung (10), dadurch gekennzeichnet, dass das Funktionsteil mehrere Langelemente (2) aufweist, welche im wesentlichen in Vorzugsrichtung (10) orientiert und über ihre ganze Länge thermoplastisch miteinander verbunden sind, wobei die Langelemente je aus einem inneren Kern (3) mit grossteils längsorientierten Fasern und einem umhüllenden Mantel (6) mit sich kreuzenden Fasern bestehen.

2. Funktionsteil nach Anspruch 1, dadurch gekennzeichnet, dass die Langelemente (2) einen unidirektionalen Kern (4) aufweisen.

3. Funktionsteil nach Anspruch 1, dadurch gekennzeichnet, dass der innere Kern der Langelemente aus einem langgezogenen Geflecht (5) besteht mit einem Faserwinkel W1 von höchstens 20° zur Elementachse A.

4. Funktionsteil nach einem der vorangehenden Ansprüche, dadurch gekennzeichnet, dass der umhüllende Mantel (6) aus sich kreuzenden Gelegen (7) oder aus einem Geflecht (8) besteht.

5. Funktionsteil nach einem der vorangehenden Ansprüche, dadurch gekennzeichnet, dass der Porenanteil weniger als 1 % beträgt.

6. Funktionsteil nach einem der vorangehenden Ansprüche, dadurch gekennzeichnet, dass als Thermoplaste, Polyamide, Polyarylate, Polyaryletherketone, Polyarylsulfone, Polyetherimide, Polyethylenterephthalate, Polypropylene, Polyphenylenether oder Polyphenylensulfide vorgesehen sind.

7. Funktionsteil nach einem der vorangehenden Ansprüche, gekennzeichnet durch Endlosfasern aus Kohle, Glas oder Aramid.

8. Funktionsteil nach einem der vorangehenden Ansprüche, dadurch gekennzeichnet, dass die Länge L der Langelemente mindestens das fünffache ihres kleinsten Durchmessers d beträgt.

9. Funktionsteil nach einem der vorangehenden Ansprüche, dadurch gekennzeichent, dass die Langelemente (2) an ihren Enden schräg auslaufen mit einem Winkel W2 zwischen 30° und 60°.

10. Funktionsteil nach einem der vorangehenden Ansprüche, dadurch gekennzeichnet, dass alle Langelemente (2) an deren Oberfläche (11), hauptsächlich an deren Endflächen (12,13) enden.

11. Funktionsteil, dadurch gekennzeichnet, dass alle Langelemente thermisch verformt sind und dass auch in flachen Querschnitten (17) zur Vorzugsrichtung jedes Langelement (2) mindestens teilweise durch ein benachbartes Langelement (21) überdeckt ist.

12. Funktionsteil nach einem der vorangehenden Ansprüche, dadurch gekennzeichnet, dass mindestens 6 Längselemente in einem Hauptquerschnitt (22) liegen.

13. Funktionsteil nach einem der vorangehenden Ansprüche, dadurch gekennzeichnet, dass die Querschnittsform (23,24) sich über das Funktionsteil verändert.

14. Funktionsteil nach einem der vorangehenden Ansprüche, dadurch gekennzeichnet, dass es an mindestens einem Ende sich verjüngend (26) ausgebildet ist.

15. Funktionsteil nach einem der vorangehenden Ansprüche, dadurch gekennzeichnet, dass es in einem Teilbereich abgeflacht (17) ist.

16. Funktionsteil nach einem der vorangehenden Ansprüche, dadurch gekennzeichnet, dass es stab- oder hebelförmig (27) ausgebildet ist.

17. Funktionsteil nach einem der Ansprüche 1 bis 15, dadurch gekennzeichnet, dass es schaufelförmig (31), sphärisch (32) oder schalenförmig (33) ausgebildet ist.

18. Turbinenschaufel (30), dadurch gekennzeichnet, dass sie aus einem Funktionsteil nach einem der vorangehenden Ansprüche gebildet ist.

19. Hebel (40), dadurch gekennzeichnet, dass er aus einem Funktionsteil nach einem der Ansprüche 1 bis 17 gebildet ist und mindestens eine ausgeformte Durchgangsöffnung (41) aufweist.
